# EUROPEAN PATENT SPECIFICATION

(11) **EP 4 318 696 B1**
(45) Date of publication and mention of the grant of the patent: **25.06.2025**
(21) Application number: 22895833.6
(22) Date of filing: 27.09.2022
(51) Int. Cl.: H01M 10/04, B65G 47/90, H01M 50/30, H01M 50/105, H01M 50/178

(54) **GRIPPER AND SECONDARY BATTERY TRANSFER DEVICE INCLUDING THE SAME**
GREIFER UND SEKUNDÄRBATTERIEÜBERTRAGUNGSVORRICHTUNG DAMIT
DISPOSITIF DE PRÉHENSION ET DISPOSITIF DE TRANSFERT DE BATTERIE SECONDAIRE LE COMPRENANT

(30) Priority: 18.11.2021 KR 20210159688
(43) Date of publication of application: 07.02.2024
(73) Proprietor: LG ENERGY SOLUTION, LTD., Seoul 07335 (KR)
(72) Inventor: WOO, Chang Ha, Daejeon 34122 (KR); BAEK, Jeong Gyu, Daejeon 34122 (KR); JI, Chang Min, Daejeon 34122 (KR)
(74) Representative: Plasseraud IP
(86) International application number: PCT/KR2022/014477
(87) International publication number: WO 2023/090624

(56) References cited:
- KR-A- 20140 133 140
- KR-A- 20170 103 332
- KR-A- 20210 097 301
- KR-B1- 101 486 232
- KR-B1- 101 830 350
- KR-B1- 102 254 203
- KR-B1- 102 254 203

## Description

### TECHNICAL FIELD

### CROSS-REFERENCE TO RELATED APPLICATION

The present application claims the benefit of the priority of Korean Patent Application No. 10-2021-0159688, filed on November 18, 2021.

### TECHNICAL FIELD

The present disclosure relates to a gripper and a secondary battery transfer device including the same, and more particularly, to a gripper that transfers a secondary battery, and a secondary battery transfer device including the gripper.

### BACKGROUND ART

Recently, as information technology (IT) is remarkably developed, the use of various portable information and communication devices has been proliferated and accordingly, the 21st century society evolves into a "ubiquitous society" in which high-quality information service is available regardless of time and place.

Lithium secondary batteries play an important role in the evolution into such a ubiquitous society. Specifically, chargeable and dischargeable lithium secondary batteries are not only widely used as energy sources for wireless mobile devices, but also used as energy sources for electric vehicles, hybrid electric vehicles, and so on, which have been proposed to solve problems such as air pollution caused by existing gasoline and diesel vehicles using fossil fuel.

As devices to which the lithium secondary batteries are applied are diversified as described above, the lithium secondary batteries are diversified so as to provide powers and capacities suitable for the devices. In addition, there is a strong need to reduce the size and weight of the lithium secondary batteries.

According to the shape of a battery, the lithium secondary batteries may be classified into cylindrical type secondary batteries, prismatic type secondary batteries, pouch type secondary batteries, and so on. Among these batteries, the pouch type secondary batteries, which can be stacked with high integration, has a high energy density per weight, and is inexpensive and easy change in shape, attract a lot of interest. In order to handle pouch type batteries there exist gripper system such as described in documents KR 2014 0133140 A, corresponding to the preambles of the independent claims, that comprises a gripping system holding a battery through electrode leads and pouch in a same plane and KR 102 254 203 B1 that hold a battery at a sealing border.

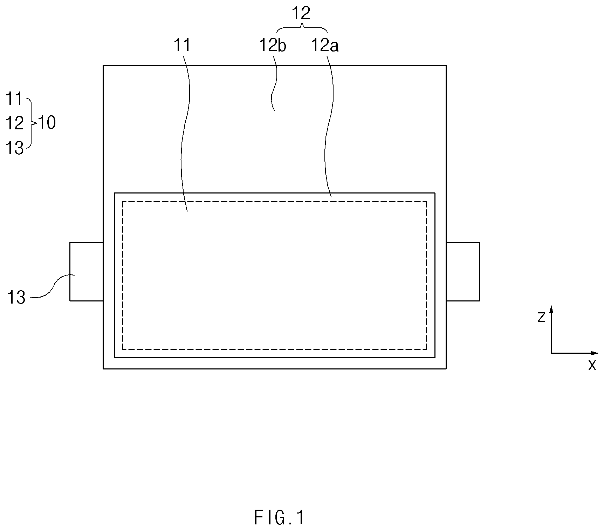

Here, as illustrated in FIG. 1, a pouch type secondary battery 10 has a structure in which an electrode assembly 11 constituted by a positive electrode, a negative electrode, and a separate disposed therebetween is embedded in a pouch 12 having an empty space defined therein together with an electrolyte, and an outer circumference of a battery case is sealed, and an electrode lead 13 electrically connected to the electrode assembly 11 protrudes from the pouch 12.

The pouch 12 may have a structure in which an inner resin layer made of a synthetic resin material, an ultra-thin metal layer made of a metal material, and an outer resin layer made of a synthetic resin material are stacked from the inside toward the outside. The pouch 12 includes an accommodation part 12a in which the electrode assembly 11 and the electrolyte are accommodated, and a gas pocket part 12b which extends from the accommodation part 12a and in which gas generated from the electrode assembly 11 is collected.

Such a secondary battery 10 is transferred between process stages during a secondary battery manufacturing process. Here, a secondary battery transfer device including a gripper that presses and fixes the secondary battery 10 is used as one of units that transfer the secondary battery 10.

The gripper may press and fix the secondary battery 10, and then move in a vertical direction or in a horizontal direction so as to transfer the secondary battery 10 between the process stages. In more detail, the gripper presses and fixes at least an area of the secondary battery 10 in a state, in which the secondary battery 10 is accommodated to stand vertically so that the gas pocket part 12b is disposed above the accommodation part 12a, and then moves in the vertical direction or in the horizontal direction so as to perform the transfer of the secondary battery 10.

However, there is a problem that the gas pocket part 12b is biased toward the front or rear of the pouch during the accommodating or transferring of the secondary battery 10. In this case, when the gripper moves towards the secondary battery 10, there are problems that the gas pocket part 12b interferes with the gripper to cause scratch on an outer appearance of the secondary battery 10 or to make it difficult for the gripper to grip the secondary battery, so that secondary battery quality is deteriorated and process efficiency is reduced. Thus, technologies for fundamentally solving the above problems are required.

### DISCLOSURE OF THE INVENTION

### TECHNICAL PROBLEM

The present invention has been made to solve the above problems, and an object of the present invention is to provide a gripper with which a position of a gas pocket part is fixed, and a secondary battery transfer device including the gripper.

### TECHNICAL SOLUTION

The present invention provides a gripper that presses and fixes a secondary battery including a pouch, which includes an accommodation part in which an electrode assembly is accommodated and a gas pocket part extending from the accommodation part, and an electrode lead protruding from the pouch. The gripper includes at least one electrode lead fixing part that presses and fixes the electrode lead, and at least one gas pocket part fixing part that presses and fixes the gas pocket part.

The electrode lead fixing part may be provided in a pair and movably provided to adjust a spaced distance between the pair of electrode lead fixing parts.

The gas pocket part fixing part may be provided in a pair and movably provided to adjust a spaced distance between the pair of gas pocket part fixing parts.

The gas pocket part fixing part may include a connection part connected to the electrode lead fixing part, and a protrusion protruding from the connection part so as to face one surface of the gas pocket part.

The protrusion may protrude perpendicularly from the connection part.

The protrusion may include a pressing part that is provided to face the gas pocket part so as to press the gas pocket part, and an inclined part extending from the pressing part. The inclined part may be inclined in a direction that is away from the gas pocket part, as being far away from the pressing part.

The inclined part may be disposed at a lower portion of the pressing part and inclined toward a lower side in a direction that is away from the gas pocket part.

The gas pocket part fixing part may further include a pad part provided in an area facing the gas pocket part to improve adhesion with the gas pocket part.

The pad part may be made of silicon.

The gas pocket part fixing part may further include a pad part provided between the pressing part and the gas pocket part to improve adhesion with the gas pocket part.

The present invention provides a secondary battery transfer device that transfers a secondary battery including a pouch, which includes an accommodation part in which an electrode assembly is accommodated and a gas pocket part extending from the accommodation part, and an electrode lead protruding from the pouch. The secondary battery transfer device includes a body part and a pair of grippers that are movably connected to the body part and press and fix the secondary battery, wherein each of the grippers includes at least one electrode lead fixing part that presses and fixes the electrode lead, and at least one gas pocket part fixing part that presses and fixes the gas pocket part.

### ADVANTAGEOUS EFFECTS

The present invention has the advantage that the gas pocket part fixing part may be used to fix the position of the gas pocket part so that the gripper may smoothly press and fix the secondary battery.

The present invention has the advantage that the gas pocket part fixing part may be used to fix the position of the gas pocket part so as to minimize the damage that may be caused by the gripper on the outer appearance of the secondary battery.

### BRIEF DESCRIPTION OF THE DRAWINGS

FIG. 1 is a front view illustrating a secondary battery when viewed from a front side.
FIG. 2 is a front view illustrating a secondary battery manufacturing device including a gripper according to Embodiment 1 of the present invention when viewed from a front side.
FIGS. 3(a) and 3(b) are perspective views illustrating the gripper of the secondary battery manufacturing device in FIG. 2 in more detail.
FIG. 4 is a perspective view illustrating a gas pocket part fixing part in FIG. 3(a) in more detail.

### MODE FOR CARRYING OUT THE INVENTION

Hereinafter, preferred embodiments of the present invention will be described in detail with reference to the accompanying drawings so as to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. In the drawings, like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe his or her invention in the best ways.

### Gripper

The present invention provides a gripper 100 that presses and fixes a secondary battery 10 including a pouch 12, which includes an accommodation part 12a in which an electrode assembly 11 is accommodated and a gas pocket part 12b extending from the accommodation part 12a, and an electrode lead 13 protruding the pouch 12.

The secondary battery 10 may be supported by a support 20. Here, the support 20 is a component that supports the secondary battery 10, and may have various configurations.

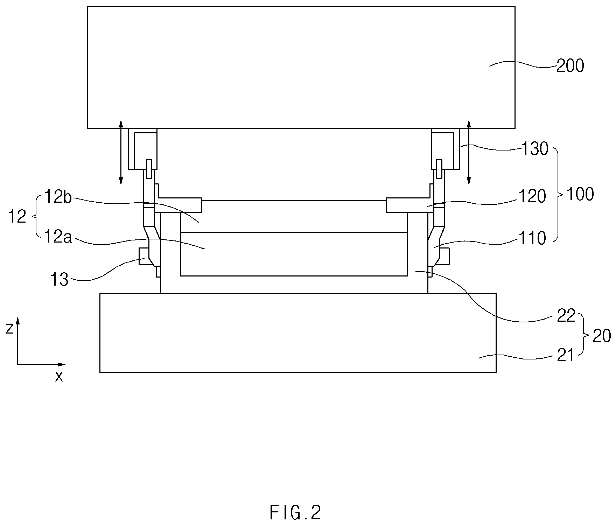

Specifically, as illustrated in FIG. 2, the support 20 may include a horizontal support 21 that supports the secondary battery 10 at a lower side, and at least one vertical support 22 that perpendicularly extends upward from the horizontal support 21 to support the secondary battery 10 at a lateral side.

Here, the horizontal support 21 and the vertical support 22 may each have various shapes.

For example, the horizontal support 21 and the vertical support 22 may each have a flat plate shape or a block shape. Here, the vertical support 22 may have a ' 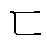 ' shape so as fit and fix the accommodation part 12a of the secondary battery 10. The horizontal support 21 and the vertical support 22 may be provided as an integrated component, and may be provided as separate components.

The gripper 100 is a component that presses and fixes the secondary battery 10, and may have various configurations.

Specifically, the gripper 100 may press and fix the secondary battery 10, and then move so as to transfer the secondary battery 10 from one position to another position. Here, a moving direction of the gripper 100 may be set to various directions such as a vertical direction or a horizontal direction.

The gripper 100 may be provided in plurality. For example, the gripper 100 may be provided in a pair. In this case, as illustrated in FIG. 2, the grippers 100 may be disposed at positions corresponding to both ends, respectively, of the pouch 12, at which the electrode lead 13 is disposed.

Such a gripper 100 may have various structures. In accordance with the claims, the gripper 100 includes at least one electrode lead fixing part 110 that presses and fixes the electrode lead 13, and at least one gas pocket part fixing part 120 that presses and fixes the gas pocket part.

Here, the electrode lead fixing part 110 is a component that presses and fixes the electrode lead 13, and may have various configurations.

For example, the electrode lead fixing part 110 may grip and fix the electrode lead 13 by simultaneously pressing one surface of the electrode lead 13 protruding the pouch 12 and the other surface disposed in a direction opposite to the one surface.

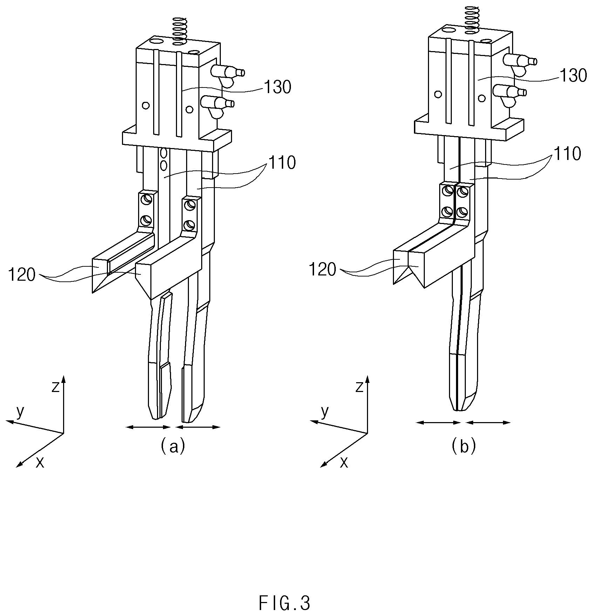

In this case, as illustrated in FIGS. 3(a) and 3(b), the electrode lead fixing part 110 may be provided in a pair to face each other. Here, the electrode lead fixing parts 110 may be movably provided to adjust a spaced distance therebetween so as to grip the electrode lead 13.

In more detail, as illustrated in FIG. 3(a), the pair of electrode lead fixing parts 110 may be spaced a predetermined distance from each other before pressing and fixing the electrode lead 13.

As illustrated in FIG. 3(b), the pair of electrode lead fixing parts 110 may press and fix the electrode assembly 11 by moving in the horizontal direction (a y direction in FIG. 3) so that the spaced distance of the pair of electrode lead fixing parts 110 decreases. In this case, the pair of electrode lead fixing parts 110 may be spaced a distance corresponding to the width of the electrode lead 13 from each other. Here, the distance corresponding to the width of the electrode lead 13 may be a distance that is the same as or smaller than the width of the electrode lead 13.

The gripper 100 described above may further include a body part 130 so as to move the electrode lead fixing part 110. That is, the electrode lead fixing part 110 may be movably connected to the body part 130, and the body part 130 may include a driving device such as a linear motion (LM) guide that operates with the electrode lead fixing part 110 so as to move the electrode lead fixing part 110.

Such an electrode lead fixing part 110 may have various shapes. For example, the electrode lead fixing part 110 may have a bar shape extending in a longitudinal direction that is a height direction (a z direction in FIG. 1) of the secondary battery 10.

In the electrode lead fixing part 110, a pad made of a silicon material or the like, which may improve adhesion with the electrode lead 13, may be further provided in an area provided to face the electrode lead 13. Here, when the electrode lead fixing part 110 has the bar shape, the pad may be provided at an end of the bar shape.

The gas pocket part fixing part 120 is a component that presses and fixes the gas pocket part, and may have various configurations.

Specifically, the gas pocket part fixing part 120 may press and fix the gas pocket part 12b so that the gas pocket part 12b is disposed at a fixed position. Here, the fixed position may be understood as a position at which the gas pocket part 12b is aligned parallel to the accommodation part 12a.

That is, when the gas pocket part 12b is biased toward the front or rear of the pouch 12 to deviate from the fixed position, the gas pocket part fixing part 120 may realign the gas pocket part 12b at the fixed position. Here, the aligned gas pocket part 12b may maintain the alignment position due to the stiffness of an ultra-thin metal layer including a metal material (e.g., aluminum, etc.) constituting the pouch 12.

Such a gas pocket part fixing part 120 may grip and fix the gas pocket part 12b by simultaneously pressing one surface of the gas pocket part 12b and the other surface disposed in a direction opposite to the one surface.

In this case, as illustrated in FIGS. 3(a) and 3(b), the gas pocket part fixing part 120 may be provided in a pair to face each other. In more detail, the gas pocket part fixing parts 120 may be movably provided to adjust a spaced distance therebetween so as to grip the gas pocket part fixing part 120.

In more detail, as illustrated in FIG. 3(a), the pair of gas pocket part fixing parts 120 may be spaced a predetermined distance from each other before pressing and fixing the gas pocket part 12b.

As illustrated in FIG. 3(b), the pair of gas pocket part fixing parts 120 may press and fix the gas pocket part 12b by moving in the horizontal direction (the y direction in FIG. 3(a)and 3(b)) so that the spaced distance decreases. In this case, the pair of gas pocket part fixing parts 120 may be spaced a distance corresponding to the width of the gas pocket part 12b from each other. Here, the distance corresponding to the width of the gas pocket part 12b may be a distance that is the same as or smaller than the width of the gas pocket part 12b.

The gas pocket part fixing part 120 as described above may have various structures.

For example, the gas pocket part fixing part 120 may include a connection part 121 connected to the electrode lead fixing part 110, and a protrusion 122 protruding from the connection part 121 so as to face one surface of the gas pocket part 12b.

The gas pocket part fixing part 120 may further include a pad part 123 provided in an area facing the gas pocket part 12b to improve adhesion with the gas pocket part 12b.

Here, the connection part 121 is a component to connect to the electrode lead fixing part 110, and may have various configurations.

Specifically, as the connection part 121 is connected to the electrode lead fixing part 110, the connection part 121 may operate with movement of the electrode lead fixing part 110 so that the protrusion 122 to be described later is movable.

More specifically, as illustrated in FIGS. 3a and 3b, the connection part 121 may be connected to the electrode lead fixing part 110 at one side of the electrode lead fixing part 110. In this case, the connection part 121 may be bolt-coupled to the electrode lead fixing part 110.

The protrusion 122 is a component protruding from the connection part 121 so as to face one surface of the gas pocket part 12b and may have various configurations.

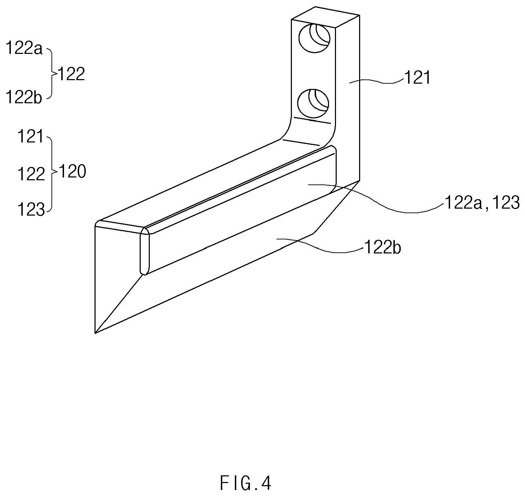

Specifically, the protrusion 122 may protrude from the connection part 121 in a direction parallel to the gas pocket part 12b so as to face the one surface of the gas pocket part 12b. Here, as illustrated in FIG. 4, the protrusion 122 may protrude from the connection part 121 in various directions, and, for example, may protrude perpendicularly from the connection part 121.

In more detail, the protrusion 122 may include a pressing part 122a that is provided to face the gas pocket part 12b and presses the gas pocket part 12b, and an inclined part 122b extending from the pressing part 122a.

Here, the pressing part 122a is a component that is provided to face the gas pocket part 12b and presses the gas pocket part 12b, and may have various configurations.

Specifically, as the pressing part 122a has one surface provided to face the gas pocket part 12b, the one surface may press the gas pocket part 12b when the gas pocket part fixing part 120 moves in the horizontal direction.

As illustrated in FIG. 4, the pad part 123, which may improve the adhesion between the pressing part 122a and the gas pocket part 12b, may be provided between the pressing part 122a and the gas pocket part 12b, i.e., between one surface of the pressing part 122a facing the gas pocket part 12b and the gas pocket part 12b.

FIG. 4 illustrates that reference symbols 122a and 123 indicate the same position. However, it is noted that the pad part 123 is a component additionally provided on one surface of the pressing part 122a, and thus the pad part 123 and the pressing part 122a are concepts distinguished from each other.

The pad part 123 may include various materials. For example, the pad part 123 may include a material such as silicon, urethane, and rubber. The pad part 123 may adhere to be fixed to the pressing part 122a in various methods or may be provided in various methods such as spray coating.

The inclined part 122b is a component extending from the pressing part 122a and may have various configurations.

Specifically, the inclined part 122b is a component that allows the gas pocket part 12b to be smoothly inserted between the pair of gas pocket part fixing parts 120 even when the gas pocket part 12b is biased toward the front or rear of the secondary battery 10. The inclined part 122b may extend to be inclined from the pressing part 122a.

In this case, as the gas pocket part 12b is guided in an inclined direction of the inclined surface, the gas pocket part 12b may be disposed to face the pressing part 122a described above. For this, the inclined part 122b may be inclined in a direction that is away from the gas pocket part, as being far away from the pressing part 122a.

In one example, when the gripper 100 moves in the vertical direction (a z direction in FIG. 2) with respect to the secondary battery 10, the inclined part 122b may be disposed at a lower portion of the pressing part 122a and inclined toward a lower side in the direction that is away from the gas pocket part 12b.

In another example, when the gripper 100 moves in the horizontal direction (an x direction in FIG. 2) with respect to the secondary battery 10, the inclined part 122b may be disposed at one lateral portion of the pressing part 122a and inclined toward one side far away from the pressing part 122a in the direction that is away from the gas pocket part 12b.

### Secondary battery transfer device

The present invention provides a secondary battery transfer device that transfers a secondary battery 10 including a pouch 12, which includes an accommodation part 12a in which an electrode assembly 11 is accommodated and a gas pocket part 12b extending from the accommodation part 12a, and an electrode lead 13 protruding from the pouch 12, the secondary battery transfer device including a body part and a pair of grippers 100 that are movably connected to the body part and press and fix the secondary battery 10.

Here, a main body part 200 is a component connected to the grippers 100 and may include a driving device such as a linear motion (LM) guide that operates with the grippers 100 so that the grippers 100 are movable in at least one of the vertical direction or the horizontal direction.

The grippers 100 each is a component that presses and fixes the secondary battery 10, and may have various configurations.

In more detail, the gripper 100 is a component that includes at least one electrode lead fixing part 110 that a presses and fixes the electrode lead 13, and at least one gas pocket part fixing part 120 that presses and fixes the gas pocket part. The gripper 100 may have various configurations.

Here, the detailed description of the electrode lead fixing part 110 and the gas pocket part fixing part 120 may be replaced with the contents described above.

Although the present invention has been described with reference to the limited embodiments and drawings, the present invention is not limited thereto and may be variously implemented by those of ordinary skill in the art to which the present invention pertains, within the scope of the appended claims.

### [Description of the Symbols]

- 10:: Secondary battery
- 11:: Electrode assembly
- 12:: Pouch
- 12a:: Accommodation part
- 12b:: Gas pocket part
- 13:: Electrode lead
- 20:: Support
- 21:: Horizontal support
- 22:: Vertical support
- 100:: Gripper
- 110:: Electrode lead fixing part
- 120:: Gas pocket part fixing part
- 121:: Connection part
- 122:: Protrusion
- 122a:: Pressing part
- 122b:: Inclined part
- 123:: Pad part
- 130:: Body part
- 200:: Main body part

## Claims

1. A gripper (100) configured to press and fix a secondary battery (10) comprising a pouch (12), which comprises an accommodation part (12a) in which an electrode assembly (11) is accommodated and a gas pocket part (12b) extending from the accommodation part (12a), and an electrode lead (13) protruding from the pouch (12), wherein the gripper (100) comprises:
at least one electrode lead fixing part (110) configured to press and fix the electrode lead (13); and **characterized in that** the gripper also comprises
at least one gas pocket part fixing part (120) configured to press and fix the gas pocket part (12b).

2. The gripper of claim 1, wherein the electrode lead fixing part (110) is provided in a pair and movably provided to adjust a spaced distance between the pair of electrode lead fixing parts (110).

3. The gripper of claim 1, wherein the gas pocket part fixing part (120) is provided in a pair and movably provided to adjust a spaced distance between the pair of gas pocket part fixing parts (120).

4. The gripper of claim 1, wherein the gas pocket part fixing part (120) comprises:
a connection part (121) connected to the electrode lead fixing part (110); and
a protrusion (122) protruding from the connection part (121) so as to face one surface of the gas pocket part (12b).

5. The gripper of claim **4,** wherein the protrusion (122) protrudes perpendicularly from the connection part (121).

6. The gripper of claim **5,** wherein the protrusion (122) comprises a pressing part (122a) provided to face the gas pocket part (12b) so as to press the gas pocket part (12b), and an inclined part (122b) extending from the pressing part (122a),
wherein the inclined part (122b) is inclined in a direction that is away from the gas pocket part (12b), as being far away from the pressing part (122a).

7. The gripper of claim 6, wherein the inclined part (122b) is disposed at a lower portion of the pressing part (122a) and inclined toward a lower side in the direction that is away from the gas pocket part (12b).

8. The gripper of claim 1, wherein the gas pocket part fixing part (120) further comprises a pad part (123) provided in an area facing the gas pocket part (12b) to improve adhesion with the gas pocket part (112b).

9. The gripper of claim 8, wherein the pad part (123) is made of silicon.

10. The gripper of claim 6, wherein the gas pocket part fixing part (120) further comprises a pad part (123) provided between the pressing part (122a) and the gas pocket part (12b) to improve adhesion with the gas pocket part (12b).

11. A secondary battery transfer device configured to transfer a secondary battery (10) including a pouch (12), which includes an accommodation part (12a) in which an electrode assembly (11) is accommodated and a gas pocket part (12b) extending from the accommodation part (12a), and an electrode lead (13) protruding from the pouch (12), the secondary battery transfer device comprising:
a body part (130); and
a pair of grippers (100) movably connected to the body part (130) and configured to press and fix the secondary battery (10),
wherein each of the grippers (10) comprises
at least one electrode lead fixing part (110) configured to press and fix the electrode lead (13), **characterized in that** each of the grippers also comprises
at least one gas pocket part fixing part (120) configured to press and fix the gas pocket part (12b).

## Patentansprüche

1. Greifer (100), welcher dazu eingerichtet ist, gegen eine Sekundärbatterie (10) zu drücken und sie zu fixieren, welche einen Beutel (12), welcher einen Aufnahmeteil (12a), in welchem eine Elektrodenanordnung (11) aufgenommen ist, und einen Gastaschenteil (12b) umfasst, welcher sich von dem Aufnahmeteil (12a) erstreckt, und eine Elektrodenleitung (13) umfasst, welche von dem Beutel (12) vorsteht, wobei der Greifer (100) umfasst:
wenigstens einen Elektrodenleitungsfixierungsteil (110), welcher dazu eingerichtet ist, gegen die Elektrodenleitung (13) zu drücken und sie zu fixieren; und
**dadurch gekennzeichnet, dass** der Greifer ebenfalls wenigstens einen Gastaschenfixierungsteil (120) umfasst, welcher dazu eingerichtet ist, gegen den Gastaschenteil (12b) zu drücken und ihn zu fixieren.

2. Greifer nach Anspruch 1, wobei der Elektrodenleitungsfixierungsteil (110) in einem Paar bereitgestellt ist und beweglich bereitgestellt ist, um einen Abstand zwischen dem Paar von Elektrodenleitungsfixierungsteilen (110) anzupassen.

3. Greifer nach Anspruch 1, wobei der Gastaschenfixierungsteil (120) in einem Paar bereitgestellt ist und beweglich bereitgestellt ist, um einen Abstand zwischen dem Paar von Gastaschenfixierungsteilen (120) anzupassen.

4. Greifer nach Anspruch 1, wobei der Gastaschenfixierungsteil (120) umfasst:
einen Verbindungsteil (121), welcher mit dem Elektrodenleitungsfixierungsteil (110) verbunden ist; und
einen Vorsprung (122), welcher derart von dem Verbindungsteil (121) vorsteht, dass er einer Fläche des Gastaschenteils (12b) zugewandt ist.

5. Greifer nach Anspruch 4, wobei der Vorsprung (122) senkrecht von dem Verbindungsteil (121) vorsteht.

6. Greifer nach Anspruch 5, wobei der Vorsprung (122) einen Druckteil (122a), welcher derart bereitgestellt ist, dass er dem Gastaschenteil (12b) zugewandt ist, um gegen den Gastaschenteil (12b) zu drücken, und einen geneigten Teil (122b) umfasst, welcher sich von dem Druckteil (122a) erstreckt,
wobei der geneigte Teil (122b) in einer Richtung geneigt ist, welche von dem Gastaschenteil (12b) wegführt, wenn sie weit von dem Druckteil (122a) entfernt ist.

7. Greifer nach Anspruch 6, wobei der geneigte Teil (122b) an einem unteren Abschnitt des Druckteils (122a) angeordnet ist und in der Richtung, welche von dem Gastaschenteil (12b) wegführt, in Richtung einer unteren Seite geneigt ist.

8. Greifer nach Anspruch 1, wobei der Gastaschenfixierungsteil (120) ferner einen Padteil (123) umfasst, welcher in einem Bereich bereitgestellt ist, der dem Gastaschenteil (12b) zugewandt ist, um eine Adhäsion mit dem Gastaschenteil (112b) zu verbessern.

9. Greifer nach Anspruch 8, wobei der Padteil (123) aus Silikon hergestellt ist.

10. Greifer nach Anspruch 6, wobei der Gastaschenfixierungsteil (120) ferner einen Padteil (123) umfasst, welcher zwischen dem Druckteil (122a) und dem Gastaschenteil (12b) bereitgestellt ist, um eine Adhäsion mit dem Gastaschenteil (12b) zu verbessern.

11. Sekundärbatterietransfervorrichtung, welche dazu eingerichtet ist, eine Sekundärbatterie (10) zu transferieren, welche einen Beutel (12), welcher einen Aufnahmeteil (12a), in welchem eine Elektrodenanordnung (11) aufgenommen ist, und einen Gastaschenteil (12b) umfasst, welcher sich von dem Aufnahmeteil (12a) erstreckt, und eine Elektrodenleitung (13) umfasst, welche von dem Beutel (12) vorsteht, wobei die Sekundärbatterietransfervorrichtung umfasst:
einen Körperteil (130); und
ein Paar von Greifern (100), welche beweglich mit dem Körperteil (130) verbunden sind und dazu eingerichtet sind, gegen die Sekundärbatterie (10) zu drücken und sie zu fixieren,
wobei jeder der Greifer (10)
wenigstens einen Elektrodenleitungsfixierungsteil (110) umfasst, welcher dazu eingerichtet ist, gegen die Elektrodenleitung (13) zu drücken und sie zu fixieren,
**dadurch gekennzeichnet, dass** jeder der Greifer ebenfalls wenigstens einen Gastaschenfixierungsteil (120) umfasst, welcher dazu eingerichtet ist, gegen den Gastaschenteil (12b) zu drücken und ihn zu fixieren.

## Revendications

1. Préhenseur (100) configuré pour presser et fixer une batterie secondaire (10) comprenant une poche (12), qui comprend une partie de logement (12a) dans laquelle est logé un ensemble d'électrodes (11) et une partie de poche de gaz (12b) s'étendant à partir de la partie de logement (12a), et un fil d'électrode (13) faisant saillie de la poche (12), dans lequel le préhenseur (100) comprend :
au moins une partie de fixation de fil d'électrode (110) configurée pour presser et fixer le fil d'électrode (13) ; et **caractérisé en ce que** le préhenseur comprend également au moins une partie de fixation de partie de poche de gaz (120) configurée pour presser et fixer la partie de poche de gaz (12b).

2. Préhenseur selon la revendication 1, dans lequel la partie de fixation de fil d'électrode (110) est prévue par paire et est prévue de manière mobile pour ajuster une distance espacée entre la paire de parties de fixation de fil d'électrode (110).

3. Préhenseur selon la revendication 1, dans lequel la partie de fixation de partie de poche de gaz (120) est prévue par paire et est prévue de manière mobile pour ajuster une distance espacée entre la paire de parties de fixation de partie de poche de gaz (120).

4. Préhenseur selon la revendication 1, dans lequel la partie de fixation de partie de poche de gaz (120) comprend :
une partie de raccordement (121) raccordée à la partie de fixation de fil d'électrode (110) ; et
une saillie (122) faisant saillie de la partie de raccordement (121) de façon à faire face à une surface de la partie de poche de gaz (12b).

5. Préhenseur selon la revendication 4, dans lequel la saillie (122) fait saillie perpendiculairement à la partie de raccordement (121).

6. Préhenseur selon la revendication 5, dans lequel la saillie (122) comprend une partie de pression (122a) prévue pour faire face à la partie de poche de gaz (12b) de façon à presser la partie de poche de gaz (12b), et une partie inclinée (122b) s'étendant à partir de la partie de pression (122a),
dans lequel la partie inclinée (122b) est inclinée dans une direction qui est éloignée de la partie de poche de gaz (12b), comme étant éloignée de la partie de pression (122a).

7. Préhenseur selon la revendication 6, dans lequel la partie inclinée (122b) est disposée au niveau d'une portion inférieure de la partie de pression (122a) et inclinée vers un côté inférieur dans la direction qui est éloignée de la partie de poche de gaz (12b).

8. Préhenseur selon la revendication 1, dans lequel la partie de fixation de partie de poche de gaz (120) comprend en outre une partie de patin (123) prévue dans une zone en regard de la partie de poche de gaz (12b) pour améliorer l'adhérence avec la partie de poche de gaz (112b).

9. Préhenseur selon la revendication 8, dans lequel la partie de patin (123) est en silicone.

10. Préhenseur selon la revendication 6, dans lequel la partie de fixation de partie de poche de gaz (120) comprend en outre une partie de patin (123) prévue entre la partie de pression (122a) et la partie de poche de gaz (12b) pour améliorer l'adhérence avec la partie de poche de gaz (12b).

11. Dispositif de transfert de batterie secondaire configuré pour transférer une batterie secondaire (10) incluant une poche (12), qui inclut une partie de logement (12a) dans laquelle est logé un ensemble d'électrodes (11) et une partie de poche de gaz (12b) s'étendant à partir de la partie de logement (12a), et un fil d'électrode (13) faisant saillie de la poche (12), le dispositif de transfert de batterie secondaire comprenant :
une partie de corps (130) ; et
une paire de préhenseurs (100) raccordés de manière mobile à la partie de corps (130) et configurés pour presser et fixer la batterie secondaire (10),
dans lequel chacun des préhenseurs (10) comprend
au moins une partie de fixation de fil d'électrode (110) configurée pour presser et fixer le fil d'électrode (13), **caractérisé en ce que** chacun des préhenseurs comprend également
au moins une partie de fixation de partie de poche de gaz (120) configurée pour presser et fixer la partie de poche de gaz (12b).
